# EUROPEAN PATENT SPECIFICATION

(11) **EP 3 886 327 B1**
(45) Date of publication and mention of the grant of the patent: **20.07.2022**
(21) Application number: 20164871.4
(22) Date of filing: 23.03.2020
(51) Int. Cl.: H04B 1/3827

(54) **ELECTROMAGNETIC SHIELDING DEVICE**
VORRICHTUNG ZUR ELEKTROMAGNETISCHEN ABSCHIRMUNG
DISPOSITIF DE BLINDAGE ÉLECTROMAGNÉTIQUE

(43) Date of publication of application: 29.09.2021
(73) Proprietor: Stassinopoulos, Michael, 151 25 Maroussi, Attica (GR)
(72) Inventor: Stassinopoulos, Michael, 151 25 Maroussi, Attica (GR)
(74) Representative: TBK

(56) References cited:
- EP-A2- 1 942 580
- KR-A- 20130 028 604
- US-A1- 2012 114 270
- US-A1- 2014 051 480
- US-A1- 2016 134 320
- US-A1- 2016 197 632

## Description

### Field

The present disclosure relates to an electromagnetic shielding device. Particularly, the disclosure relates to an electromagnetic shielding device for enclosing an electromagnetically transmitting and/or receiving device such that spreading of electromagnetic radiation can be controlled.

### Background

Electromagnetic radiation, in particular radio waves are largely used for wireless communication by electromagnetically transmitting and/or receiving devices, such as laptops and mobile phones.

Besides all advantages of using wireless communication, an increasing number of studies reveal that electromagnetic radiation may have significant effects on living organisms. In many studies, electromagnetic radiation is considered as possibly acting carcinogenic on the human body, or being capable of mutating genetic material.

In particular, mobile phones are often used multiple times daily and are often placed in the immediate proximity to human bodies. Thereby, the human body is largely exposed to electromagnetic radiation transmitted and/or received from the mobile phone. In particular while sleeping at night, when the mobile phone is usually not operated, the mobile phone may still emit electromagnetic signals via its internal antenna. Although wireless communication by electromagnetic radio waves is not effectively utilized, the human body is exposed to electromagnetic radiation for a large duration.

KR 2013 0 028 604 A discloses an electromagnetic wave shielding mobile phone pocket according to the preamble of claim 1. US 2012 / 114 270 A1, EP 1 942 580 A2, US 2016 / 197 632 A1, US 2016 / 134 320 A1 and US 2014 / 051 480 A1 disclose further prior art.

Therefore, an object of the present disclosure is to provide a reliable electromagnetic shielding device with a simple configuration.

### Summary

The object is solved by an electromagnetic shielding device according to claim 1. The electromagnetic shielding device comprises a base for accommodating an electromagnetically transmitting and/or receiving device thereon, a cover for covering the electromagnetically transmitting and/or receiving device, configured to shield electromagnetic radiation transmitted from or to the electromagnetically transmitting and/or receiving device, and a weight increasing member connected to the cover for pressing the cover towards the base from an upper side by gravity.

According to such a configuration, the electromagnetic shielding device has a simple configuration and is capable of shielding electromagnetic radiation transmitted from or to the electromagnetically transmitting and/or receiving device, which is enclosed between the base and the cover of the electromagnetic shielding device.

The base may be made from a soft material, which allows safe accommodation of the electromagnetically transmitting and/or receiving device thereon, whereby damaging of the electromagnetically transmitting and/or receiving device is effectively prevented. An upper surface of the base configured to come into contact with the electromagnetically transmitting and/or receiving device may be configured as a slip-resistant surface for preventing slipping of the electromagnetically transmitting and/or receiving device. A lower surface of the base configured to come into contact with an object, on which the electromagnetic shielding device may be placed, may be configured as a slip-resistant surface for preventing slipping of the electromagnetic shielding device. Thereby, it can be ensured to safely use the electromagnetic shielding device on inclined surfaces, which are not perpendicular to the gravity direction.

The cover is made from a flexible material for accommodating the electromagnetically transmitting and/or receiving device by flexibly enclosing the electromagnetically transmitting and/or receiving device from an upper side. The flexible material can be folded around corners and edges of the electromagnetically transmitting and/or receiving device during use, such that the electromagnetically transmitting and/or receiving device is also covered from its sides. Accordingly, the flexible material of the cover allows closing a gap between the base and the cover, when the electromagnetically transmitting and/or receiving device is enclosed in the electromagnetic shielding device.

The cover is configured to shield electromagnetic radiation. Electromagnetic radiation particularly refers to mobile radio communication. Mobile radio communication may be particularly transmitted by mobile phones, mobile phone base stations, digital wireless systems, wireless internet gateways, laptops, or similar devices. Electromagnetic radiation may particularly refer to signals emitted in the frequency range of at least 900 MHz to 1800 MHz (GSM), 800 MHz to 1800 MHz (LTE), 600 MHz to 6 GHz (5G), or 2.4 GHz to 5 GHz (Wifi).

Electromagnetic radiation-shielding properties can be established by specific materials and/or a specific structure of the cover. The cover may be made from materials containing metal, such as silver or copper, or from materials containing a non-metal, such as resin or plastic, that is able to block electromagnetic radiation. Electromagnetic radiation may be blocked either by protecting the electromagnetically transmitting and/or receiving device from electromagnetic radiation on an outside of the electromagnetic shielding device, or by protecting elements located outside the electromagnetic shielding device from electromagnetic radiation emitted from the electromagnetically transmitting and/or receiving device.

The weight increasing member serves for pressing the cover towards the base from an upper side by gravity. That is, the weight increasing member may have a higher density than the cover for increasing a gravitational force pressing the cover towards the base. Thereby, it can be ensured that the cover and the base are pressed together for good sealing therebetween. Furthermore, the sealing method of using a weight increasing member has the advantage of being simple and the cover and the base do not need to be pressed or clipped together by a user applying force thereto.

The cover and the base are each made from a fabric comprising metal fibers.

Using a fabric as a material for the cover and the base is particularly suitable, as it is relatively soft and thereby provides excellent padding for the electromagnetically transmitting and/or receiving device. Yet, a fabric is relatively flexible and light, such that it is particularly suitable for enclosing the electromagnetically transmitting and/or receiving device, without largely increasing the weight. Metal fibers may be woven or knitted in the fabric. Thereby, the metal fibers may serve for shielding the electromagnetic radiation. The metal fibers may be biaxially oriented in the fabric, such that more effective shielding of electromagnetic radiation is permitted. In addition, the metal fibers may be connected with each other so as to have a common ground. By making the base from the same material as the cover, electromagnetic radiation can be shielded from all sides around the electromagnetic transmitting and/or receiving device, when the electromagnetic transmitting and/or receiving device is enclosed in the electromagnetic shielding device.

Preferably, the weight increasing member may comprise a plurality of rigid bodies connected with each other such as a chain.

Thereby, the weight increasing member has a flexible form that allows accommodating electromagnetically transmitting and/or receiving devices in different shapes. Thereby, the weight increasing member can follow irregular and unsteady outer peripheral shapes of the electromagnetically transmitting and/or receiving device, such that gaps formed between the base and the cover are more effectively prevented. Particularly, a chain may be used as the weight increasing member, which is formed by a serial connection of a plurality of metal links that are linearly and pivotably connected. Alternatively, the weight increasing member could be formed by a plurality of different elements that are not connected with each other, but are arranged side by side. In such a configuration, each element of the weight increasing member may be individually connected to the cover.

In an embodiment, the weight increasing member may be formed by a wire.

A configuration, in which the weight increasing member is formed and/or constituted by a wire, allows a simple configuration of the electromagnetic shielding device, such that manufacturing costs can be reduced.

Preferably, the weight increasing member may be continuously arranged along a portion of the outer circumference of the cover.

By arranging the weight increasing member continuously along a portion of the outer circumference of the cover, forming of gaps between the base and the cover is even more effectively prevented at least at this portion.

Preferably, the weight increasing member may be arranged inside a woven channel of the cover, so as to be covered from a side facing the base.

By arranging the weight increasing member inside a woven channel of the cover, a connection between the cover and the weight increasing member can be reliably established. Thereby, the weight increasing member is integrally connected to the cover, such that unintentional separation of the weight increasing member and the cover is effectively prevented. Moreover, by covering the weight increasing member with a part of the cover from a side facing the base, a surface of the weight increasing member is not exposed towards the base. Thereby, damaging of the electromagnetically transmitting and/or receiving device upon accommodating the electromagnetically transmitting and/or receiving device in the electromagnetic shielding device is effectively prevented.

The cover is folded around the weight increasing member and the weight increasing member is sewn-in in the cover.

Folding the cover around the weight increasing member, and sewing-in the weight increasing member in the cover provides a simple solution for connecting the weight increasing member to the cover. Moreover, by folding the cover around the weight increasing member, the weight increasing member is covered with a part of the cover from a side facing the base. Thereby, damaging of the electromagnetically transmitting and/or receiving device upon accommodating the electromagnetically transmitting and/or receiving device in the electromagnetic shielding device is effectively prevented.

Preferably, the weight increasing member may be made from a metal material.

Making the weight increasing member from a metal material provides a simple yet effective solution for achieving a suitable gravitational force for pressing the cover towards the base.

Preferably, the cover may have a connecting portion connected to the base, and the connecting portion of the cover may be located at a portion of the outer circumference of the cover. The weight increasing member may be connected to a portion of the cover other than the connecting portion for allowing opening and closing of the electromagnetic shielding device by folding or pivoting the cover around the connecting portion.

By connecting the cover and the base via a connecting portion, both elements are linked together, thereby preventing that one of both elements may get lost. Further, by providing the connecting portion at a portion of the outer circumference of the cover, and providing the weight increasing member at least on a portion of the cover opposite to the connecting portion, an accommodating space for enclosing the electromagnetically transmitting and/or receiving device in the electromagnetic shielding device is maximized. Such a configuration further allows simple and reliable sealing of the electromagnetic shielding device by a folding or pivoting movement.

The weight increasing member may be provided along the entire outer circumference (periphery) of the cover, except the connecting portion, such that no gaps are formed along the outer circumference between the weight increasing member and the connecting portion. Alternatively, the weight increasing member may be provided such that gaps are formed along the outer circumference between the weight increasing member and the connecting portion.

Preferably, the base and the cover may each have a rectangular shape in a top view, and the shape of the cover may be congruent to the shape of the base as viewed from an upper direction.

A rectangular shape of the base and the cover is easy to manufacture. Particularly, the base and the cover may have a square shape. However, the base and the cover may also have any other shapes, such as a circular shape, an oval shape, or a polygonal shape, which may be determined by a shape of the electromagnetically transmitting and/or receiving device, such that the accommodating space of the electromagnetic shielding device is maximized with respect to dimensions of the cover and the base.

In an embodiment, the cover may have a length of at least 10 cm and a width of at least 5 cm.

Dimensions of at least 10 cm by 5 cm make the electromagnetic shielding device particularly suitable for accommodating conventional cell phones or mobile phones therein.

Preferably, the cover may have a length of 50 cm or less and a width of 40 cm or less.

Dimensions of 50 cm by 40 cm or less make the electromagnetic shielding device particularly suitable for accommodating conventional mobile computers and laptops therein.

In an embodiment, the electromagnetic shielding device may have a height of 0.5 cm or more and 3 cm or less.

With such dimensions, the electromagnetic shielding device allows sufficient thickness for shielding of electromagnetic radiation. Furthermore, the electromagnetic shielding device with such a height may allow sufficient padding and mechanical protection for the electromagnetically transmitting and/or receiving device. On the other hand, the overall dimensions are not excessively increased, and a bulky electromagnetic shielding device is avoided.

Preferably, the connecting portion of the cover may be located at one edge of the rectangular shape of the cover, and the weight increasing member may be continuously arranged along the other three edges of the rectangular shape of the cover in a U-shape.

In the particular arrangement, where the base and the cover of the electromagnetic shielding device are connected at one edge of the rectangular shape of the cover, an opening area between the base and the cover can be increased, as compared to an arrangement, in which the cover and the base are connected to each other at more than on edges of the rectangular shape of the cover. Thereby, easy accommodating and removing of the electromagnetically transmitting and/or receiving device from the electromagnetic shielding device is allowed. On the other hand, by arranging the weight increasing member along the other three edges of the cover, a good sealing can be ensured.

In an embodiment, the base and the cover may be separate members.

In a particular configuration, in which the base and the cover are separate members, flexibility of the use of the electromagnetic shielding device is increased, and individual use of the base and the cover is permitted.

### Brief description of drawings

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter, in which:
Fig. 1 is a cross-sectional view of an electromagnetic shielding device according to a first embodiment of the disclosure, with an electromagnetically transmitting and/or receiving device accommodated therein;
Fig. 2 is a cross-sectional view of an electromagnetic shielding device according to a second embodiment of the disclosure, with an electromagnetically transmitting and/or receiving device accommodated therein;
Fig. 3A is a top view of the electromagnetic shielding device according to the first embodiment of the disclosure;
Fig. 3B is a top view of the electromagnetic shielding device according to the second embodiment of the disclosure;
Fig. 3C is a top view of the electromagnetic shielding device according to a third embodiment of the disclosure;
Fig. 3D is a top view of the electromagnetic shielding device according to a fourth embodiment of the disclosure;

### Detailed description

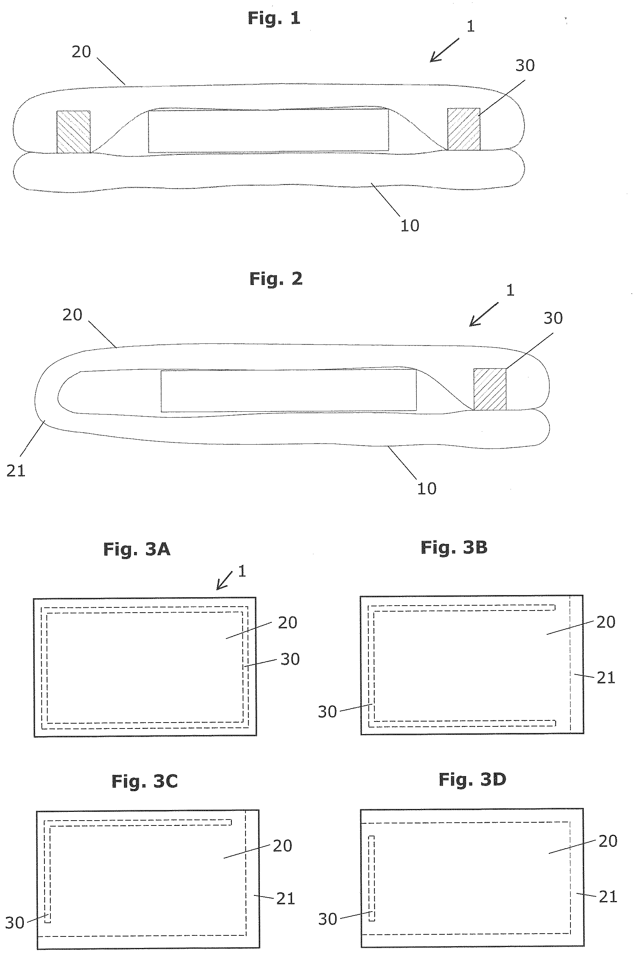

Fig. 1 shows a cross-section of an electromagnetic shielding device 1 according to a first embodiment of the disclosure. The electromagnetic shielding device 1 comprises a base 10, which is formed from a fabric. Metal fibers are interwoven in the fabric, such that electromagnetic shielding properties are achieved.

The base 10 has a rectangular plate shape and a thickness. The base 10 is configured to be placed on a surface of another element, such as that of a table. Thereby, a surface (contact surface) on one side of the base 10 comes in contact with the surface of the other element.

A size of the base 10 is larger than that of an electromagnetically transmitting and/or receiving device to be accommodated on the base 10 in a direction perpendicular to the placement direction. The base 10 is configured to accommodate an electromagnetically transmitting and/or receiving device on a surface on a side opposite to the contact surface.

The electromagnetic shielding device 1 further comprises a cover 20 made from the same fabric as the base 10. The cover 20 has a plate shape and a thickness. The size of the plate shaped cover 20 is substantially the same as the size of the plate shaped base 10.

The cover 20 is configured to be arranged on the base 10 from an upper side in the placement direction, such that the base 10 and the cover 20 are congruent when viewed from an upper side.

The electromagnetic shielding device 1 further comprises a weight increasing member 30. The weight increasing member 30 is made from a metal. The weight increasing member 30 has an elongated shape. The weight increasing member 30 is arranged along an outer periphery of the cover 20 and connected thereto. That is, the weight of the cover 20 is increased by the weight increasing member 30 on the outer periphery of the cover 20. In the first embodiment, the weight increasing member 30 is continuously arranged along the entire periphery of the cover 20.

The cover 20 protrudes further towards an outer peripheral side of the cover 20 than the weight increasing member 30.

Fig. 3A shows the electromagnetic shielding device 1 according to the first embodiment of the disclosure from a top. As shown in Fig. 3A, the weight increasing member 30 is arranged continuously along the entire periphery of the cover 20.

Fig. 2 shows a cross-section of an electromagnetic shielding device 1 according to a second embodiment of the disclosure. The configuration of the electromagnetic shielding device 1 according to the second embodiment is similar to that of the electromagnetic shielding device 1 according to the first embodiment, except that the cover 20 is connected to the base 10 via a connecting portion 21.

The connecting portion 21 is located at a portion on the outer periphery of the cover 20, as will be described later. In the present embodiment, the cover 20 and the base 10 are integrally connected at the connecting portion 21 by being made from the same piece of fabric and being folded at the connecting portion 21, such that the cover 20 overlaps with the base 10.

Fig. 3B shows the electromagnetic shielding device 1 according to the second embodiment of the disclosure from a top. In the second embodiment, the weight increasing member 30 is arranged along the periphery of the cover 20, except the portion, on which the connecting portion 21 is located, such that gaps are formed between the weight increasing member 30 and the connecting portion 21, as shown in Fig. 3B. The weight increasing member 30 may also be arranged along the periphery of the cover 20, without forming gaps between the weight increasing member 30 and the connecting portion 21. In other words, the two ends of the elongated shape of the weight increasing member 30 may abut against the connecting portion 21.

As shown in Fig. 3B, the connecting portion 21 is located on a short edge of the cover 20. The weight increasing member 30 is continuously arranged along the other short edge of the cover 20 and the two long edges of the cover 20. That is, the weight increasing member 30 forms a U-shape along the other short edge and the two long edges of the cover 20.

In a modification of the second embodiment, the connecting portion 21 could also be located on a long edge of the cover 20. In this configuration, the weight increasing member 30 is arranged along the other long edge of the cover 20 and the two short edges of the cover 20.

Fig. 3C shows the electromagnetic shielding device according to a third embodiment of the disclosure from the top. As shown in Fig. 3C, the connecting portion 21 is located on a short edge of the cover 20 and a long edge of the cover 20. In this configuration, the weight increasing member 30 is arranged along the other long edge of the cover 20 and the other short edge of the cover 20. In other words, each of the weight increasing member 30 and the connecting portion 21 has an L-shape.

The weight increasing member 30 is arranged on the cover 20 with respect to the connecting portion 21, such that gaps are formed between the weight increasing member 30 and the connecting portion 21, as shown in Fig. 3C. The weight increasing member 30 may also be arranged along the periphery of the cover 20, without forming gaps between the weight increasing member 30 and the connecting portion 21.

Fig. 3D shows the electromagnetic shielding device according to a fourth embodiment of the disclosure from the top. As shown in Fig. 3D, the connecting portion 21 is located on a short edge of the cover 20 and the two long edges of the cover 20. In other words, the connecting portion 21 has a U-shape. In this configuration, the weight increasing member 30 is arranged along the other short edge of the cover 20.

The weight increasing member 30 is arranged on the cover 20 with respect to the connecting portion 21, such that gaps are formed between the weight increasing member 30 and the connecting portion 21, as shown in Fig. 3D. The weight increasing member 30 may also be arranged along the periphery of the cover 20, without forming gaps between the weight increasing member 30 and the connecting portion 21.

As a modification of the above-described embodiments, the base 20 and the cover 30 may particularly have a square shape. In this modification, the shape and arrangement of the weight increasing member 30 may be as explained in any of the above-described embodiments. A connecting portion 21 may be formed, or the base 10 and the cover 20 may be separate members.

The particular features, structures or characteristics described in the embodiments do not all have to be present in one electromagnetic shielding device, and particular features may be omitted. The previous description is provided to enable any person skilled in the art to practice the various aspects described herein. Various modifications to the embodiments will be readily apparent to those skilled in the art, and the generic principles defined herein may be applied to other aspects. The scope of protection of the invention is defined in the appended claims.

## Claims

1. An electromagnetic shielding device (1), comprising:
a base (10) for accommodating an electromagnetically transmitting and/or receiving device thereon, and
a cover (20) for covering the electromagnetically transmitting and/or receiving device, configured to shield electromagnetic radiation transmitted from or to the electromagnetically transmitting and/or receiving device, wherein
the cover (20) and the base (10) are each made from a fabric comprising metal fibers, **characterized by**
a weight increasing member (30) connected to the cover (20) for pressing the cover (20) towards the base (10) from an upper side by gravity, and wherein
the cover (20) is folded around the weight increasing member (30) and the weight increasing member (30) is sewn-in in the cover (20).

2. An electromagnetic shielding device (1) according to claim 1, wherein the weight increasing member (30) comprises a plurality of rigid bodies connected with each other such as a chain.

3. An electromagnetic shielding device (1) according to claim 1, wherein the weight increasing member (30) is formed by a wire.

4. An electromagnetic shielding device (1) according to any one of claims 1 to 3, wherein the weight increasing member (30) is continuously arranged along a portion of the outer circumference of the cover (20).

5. An electromagnetic shielding device (1) according to any one of claims 1 to 4, wherein the weight increasing member (30) is arranged inside a woven channel of the cover (20), so as to be covered from a side facing the base (10).

6. An electromagnetic shielding device (1) according to any one of claims 1 to 5, wherein the weight increasing member (30) is made from a metal material.

7. An electromagnetic shielding device (1) according to any one of claims 1 to 6, wherein
the cover (20) has a connecting portion (21) connected to the base (10),
the connecting portion (21) of the cover (20) is located at a portion of the outer circumference of the cover (20), and
the weight increasing member (30) is connected to a portion of the cover (20) other than the connecting portion (21) for allowing opening and closing of the electromagnetic shielding device (1) by folding or pivoting the cover (20) around the connecting portion (21).

8. An electromagnetic shielding device (1) according to any one of claims 1 to 7, wherein
the base (10) and the cover (20) each have a rectangular shape in a top view, and
the shape of the cover (20) is congruent to the shape of the base (10) as viewed from an upper direction.

9. An electromagnetic shielding device (1) according to claim 8, wherein
the cover (20) has a length of at least 10 cm and a width of at least 5 cm.

10. An electromagnetic shielding device (1) according to claims 8 or 9, wherein
the cover (20) has a length of 50 cm or less and a width of 40 cm or less.

11. An electromagnetic shielding device (1) according to any one of claims 1 to 10, wherein
the electromagnetic shielding device (1) has a height of 0.5 cm or more and 3 cm or less.

12. An electromagnetic shielding device (1) according to any one of claims 7 to 11, wherein
the connecting portion (21) of the cover (20) is located at one edge of the rectangular shape of the cover (20), and
the weight increasing member (30) is continuously arranged along the other three edges of the rectangular shape of the cover (20) in a U-shape.

13. An electromagnetic shielding device (1) according to any one of claims 1 to 12, wherein
the base (10) and the cover (20) are separate members.

## Patentansprüche

1. Elektromagnetische-Abschirmung-Vorrichtung (1), mit:
einer Basis (10) zum Aufnehmen einer elektromagnetischen Sende- und/oder Empfangsvorrichtung darauf und
einer Abdeckung (20) zum Abdecken der elektromagnetischen Sende- und/oder Empfangsvorrichtung, die konfiguriert ist, elektromagnetische Strahlung abzuschirmen, die von oder zu der elektromagnetischen Sende- und/oder Empfangsvorrichtung übertragen wird, wobei
die Abdeckung (20) und die Basis (10) jeweils aus einem Gewebe gemacht sind, das Metallfasern aufweist, **gekennzeichnet durch**
ein Gewichtserhöhungselement (30), das mit der Abdeckung (20) verbunden ist, zum Pressen der Abdeckung (20) von einer oberen Seite zu der Basis (10) durch Schwerkraft und wobei
die Abdeckung (20) um das Gewichtserhöhungselement (30) gefaltet ist und das Gewichtserhöhungselement (30) in der Abdeckung (20) eingenäht ist.

2. Elektromagnetische-Abschirmung-Vorrichtung (1) nach Anspruch 1, wobei das Gewichtserhöhungselement (30) eine Vielzahl von starren Körpern aufweist, die miteinander verbunden sind, wie etwa eine Kette.

3. Elektromagnetische-Abschirmung-Vorrichtung (1) nach Anspruch 1, wobei das Gewichtserhöhungselement (30) durch einen Draht ausgebildet ist.

4. Elektromagnetische-Abschirmung-Vorrichtung (1) nach einem der Ansprüche 1 bis 3, wobei das Gewichtserhöhungselement (30) kontinuierlich entlang eines Abschnitts des Außenumfangs der Abdeckung (20) angeordnet ist.

5. Elektromagnetische-Abschirmung-Vorrichtung (1) nach einem der Ansprüche 1 bis 4, wobei das Gewichtserhöhungselement (30) innerhalb eines gewebten Kanals der Abdeckung (20) angeordnet ist, um von einer Seite abgedeckt zu sein, die der Basis (10) zugewandt ist.

6. Elektromagnetische-Abschirmung-Vorrichtung (1) nach einem der Ansprüche 1 bis 5, wobei das Gewichtserhöhungselement (30) aus einem Metallmaterial gemacht ist.

7. Elektromagnetische-Abschirmung-Vorrichtung (1) nach einem der Ansprüche 1 bis 6, wobei
die Abdeckung (20) einen Verbindungsabschnitt (21) hat, der mit der Basis (10) verbunden ist,
der Verbindungsabschnitt (21) der Abdeckung (20) sich an einem Abschnitt des Außenumfangs der Abdeckung (20) befindet und
das Gewichtserhöhungselement (30) mit einem Abschnitt der Abdeckung (20) verbunden ist, der anders ist als der Verbindungsabschnitt (21), zum Ermöglichen des Öffnens und Schließens der Elektromagnetische-Abschirmung-Vorrichtung (1), indem die Abdeckung (20) um den Verbindungsabschnitt (21) gefaltet oder geschwenkt wird.

8. Elektromagnetische-Abschirmung-Vorrichtung (1) nach einem der Ansprüche 1 bis 7, wobei
die Basis (10) und die Abdeckung (20) in einer Draufsicht jeweils eine rechteckige Form haben und
die Form der Abdeckung (20) bei Betrachtung von einer oberen Richtung kongruent zu der Form der Basis (10) ist.

9. Elektromagnetische-Abschirmung-Vorrichtung (1) nach Anspruch 8, wobei
die Abdeckung (20) eine Länge von mindestens 10 cm und eine Breite von mindestens 5 cm hat.

10. Elektromagnetische-Abschirmung-Vorrichtung (1) nach Anspruch 8 oder 9, wobei
die Abdeckung (20) eine Länge von 50 cm oder weniger und eine Breite von 40 cm oder weniger hat.

11. Elektromagnetische-Abschirmung-Vorrichtung (1) nach einem der Ansprüche 1 bis 10, wobei
die elektromagnetische-Abschirmung-Vorrichtung (1) eine Höhe von 0,5 cm oder mehr und 3 cm oder weniger hat.

12. Elektromagnetische-Abschirmung-Vorrichtung (1) nach einem der Ansprüche 7 bis 11, wobei
der Verbindungsabschnitt (21) der Abdeckung (20) sich an einer Kante der rechteckigen Form der Abdeckung (20) befindet und
das Gewichtserhöhungselement (30) in einer U-Form kontinuierlich entlang der anderen drei Kanten der rechteckigen Form der Abdeckung (20) angeordnet ist.

13. Elektromagnetische-Abschirmung-Vorrichtung (1) nach einem der Ansprüche 1 bis 12, wobei
die Basis (10) und die Abdeckung (20) separate Elemente sind.

## Revendications

1. Dispositif de blindage électromagnétique (1), comprenant :
une base (10) pour recevoir un dispositif d'émission et/ou de réception électromagnétique sur celle-ci, et
un couvercle (20) pour couvrir le dispositif d'émission et/ou de réception électromagnétique, configuré pour protéger un rayonnement électromagnétique transmis depuis ou vers le dispositif d'émission et/ou de réception électromagnétique, dans lequel
le couvercle (20) et la base (10) sont réalisés chacun à partir d'un tissu comprenant des fibres métalliques, **caractérisé par**
un élément d'augmentation de poids (30) connecté au couvercle (20) pour presser le couvercle (20) vers la base (10) à partir d'un côté supérieur par gravité, et dans lequel
le couvercle (20) est plié autour de l'élément d'augmentation de poids (30) et l'élément d'augmentation de poids (30) est cousu dans le couvercle (20).

2. Dispositif de blindage électromagnétique (1) selon la revendication 1, dans lequel l'élément d'augmentation de poids (30) comprend une pluralité de corps rigides connectés les uns aux autres, tels qu'une chaîne.

3. Dispositif de blindage électromagnétique (1) selon la revendication 1, dans lequel l'élément d'augmentation de poids (30) est formé par un fil.

4. Dispositif de blindage électromagnétique (1) selon l'une quelconque des revendications 1 à 3, dans lequel l'élément d'augmentation de poids (30) est agencé en continu le long d'une partie de la circonférence extérieure du couvercle (20).

5. Dispositif de blindage électromagnétique (1) selon l'une quelconque des revendications 1 à 4, dans lequel l'élément d'augmentation de poids (30) est agencé à l'intérieur d'un canal tissé du couvercle (20), de manière à être recouvert depuis un côté faisant face à la base (10).

6. Dispositif de blindage électromagnétique (1) selon l'une quelconque des revendications 1 à 5, dans lequel l'élément d'augmentation de poids (30) est réalisé à partir d'un matériau métallique.

7. Dispositif de blindage électromagnétique (1) selon l'une quelconque des revendications 1 à 6, dans lequel
le couvercle (20) dispose d'une partie de connexion (21) connectée à la base (10),
la partie de connexion (21) du couvercle (20) est située sur une partie de la circonférence extérieure du couvercle (20), et
l'élément d'augmentation de poids (30) est connecté à une partie du couvercle (20) autre que la partie de connexion (21) pour permettre l'ouverture et la fermeture du dispositif de blindage électromagnétique (1) en pliant ou en faisant pivoter le couvercle (20) autour de la partie de connexion (21).

8. Dispositif de blindage électromagnétique (1) selon l'une quelconque des revendications 1 à 7, dans lequel
la base (10) et le couvercle (20) ont chacun une forme rectangulaire dans une vue de dessus, et
la forme du couvercle (20) est congruente à la forme de la base (10) vue depuis une direction supérieure.

9. Dispositif de blindage électromagnétique (1) selon la revendication 8, dans lequel le couvercle (20) a une longueur d'au moins 10 cm et une largeur d'au moins 5 cm.

10. Dispositif de blindage électromagnétique (1) selon les revendications 8 ou 9, dans lequel
le couvercle (20) a une longueur de 50 cm ou moins et une largeur de 40 cm ou moins.

11. Dispositif de blindage électromagnétique (1) selon l'une quelconque des revendications 1 à 10, dans lequel
le dispositif de blindage électromagnétique (1) a une hauteur de 0,5 cm ou plus et 3 cm ou moins.

12. Dispositif de blindage électromagnétique (1) selon l'une quelconque des revendications 7 à 11, dans lequel
la partie de connexion (21) du couvercle (20) est située sur un bord de la forme rectangulaire du couvercle (20), et
l'élément d'augmentation de poids (30) est agencé en continu le long des trois autres bords de la forme rectangulaire du couvercle (20) en forme de U.

13. Dispositif de blindage électromagnétique (1) selon l'une quelconque des revendications 1 à 12, dans lequel
la base (10) et le couvercle (20) sont des éléments séparés.
